(19) Europäisches Patentamt / European Patent Office / Office européen des brevets

(11) EP 4 752 598 A1

(12) **DEMANDE DE BREVET EUROPEEN**

(43) Date de publication:
03.06.2026 Bulletin 2026/23

(21) Numéro de dépôt: 25219154.9

(22) Date de dépôt: 27.11.2025

(51) Classification Internationale des Brevets (IPC):
$G01S\ 13/30^{(2006.01)}$    $G01S\ 7/282^{(2006.01)}$
$G01S\ 7/292^{(2006.01)}$    $G01S\ 13/26^{(2006.01)}$
$G01S\ 13/58^{(2006.01)}$    $G01S\ 13/72^{(2006.01)}$
$G01S\ 7/02^{(2006.01)}$    $G01S\ 13/24^{(2006.01)}$
$G01S\ 7/41^{(2006.01)}$    $G01S\ 13/42^{(2006.01)}$

(52) Classification Coopérative des Brevets (CPC):
G01S 13/30; G01S 7/0231; G01S 7/0232;
G01S 7/0233; G01S 7/0234; G01S 7/024;
G01S 7/282; G01S 7/292; G01S 13/24;
G01S 13/26; G01S 13/581; G01S 13/72;
G01S 7/414; G01S 13/426

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **27.11.2024 FR 2413047**

(71) Demandeur: **THALES**
**92190 Meudon (FR)**

(72) Inventeurs:
• **GOY, Philippe**
**33700 MERIGNAC (FR)**
• **KEMKEMIAN, Stéphane**
**33700 MERIGNAC (FR)**

(74) Mandataire: **Lavoix**
**2, place d'Estienne d'Orves**
**75441 Paris Cedex 09 (FR)**

(54) **PROCÉDÉ DE FONCTIONNEMENT D'UN RADAR DE DÉTECTION SUIVANT AU MOINS DEUX SOUS-MODES DOPPLER ET RADAR DE DÉTECTION ASSOCIÉ**

(57) La présente invention concerne un procédé de fonctionnement d'un radar de détection de cibles suivant un mode Doppler, comprenant les étapes suivantes :
- émission/réception de signaux comprenant les sous-étapes suivantes :
+ génération (111) d'au moins deux impulsions consécutives associées à des sous-modes Doppler différents définissant des bilans énergétiques différents ;
+ émission (112) des impulsions ;
+ réception (113) dans une fenêtre temporelle commune des échos des impulsions ;
+ pour chaque sous-mode Doppler, traitement (114) des échos reçus pour générer une liste de cibles pré-détectées ;

- pour chaque sous-mode Doppler et à partir de la liste de cibles pré-détectées correspondante, mise en œuvre (130) d'un traitement d'extraction pour générer une liste de cibles détectées ;
- fusion (140) des listes de cibles détectées.

FIG.3

EP 4 752 598 A1

**Description**

La présente invention concerne un procédé de fonctionnement d'un radar de détection suivant au moins deux sous-modes Doppler.

La présente invention concerne également un radar de détection mettant en œuvre un tel procédé.

Le domaine technique de l'invention est celui des systèmes radar embarqués par exemple à bord des aéronefs, des bateaux, des sous-marins ou des satellites, mettant en œuvre une détection/identification de cibles.

La problématique générale résolue par l'invention est la gestion de la fausse alarme liée à la qualité des traitements radar d'extraction et de lever d'ambigüité.

De manière connue en soi, les modes radar de détection de cibles aériennes et de cibles mobiles terrestres emploient des formes d'onde dites Doppler. La cohérence de phase entre impulsions permet d'exploiter l'effet Doppler lié au déplacement relatif des cibles vis-à-vis du radar. Cette technique classique permet de séparer les cibles en fonction de leur vitesse radiale. Elle a augmenté considérablement le pouvoir discriminateur des radars vis-à-vis de fouillis fixe (issu du sol) ou faiblement mobile (issu de la mer).

Le traitement Doppler est un traitement cohérent (exploitant l'information de phase) permettant d'augmenter le gain cohérent vis-à-vis d'un bruit blanc gaussien et pour une cible donnée son rapport signal-à-bruit (RSB).

Le traitement Doppler permet de découper sur l'axe fréquentiel les échos étalés tels que le fouillis de sol et de mer. La cellule de résolution, appelée également une case, du traitement Doppler est inversement proportionnelle au temps d'intégration. La surface radar équivalente (appelée également SER de l'anglais « Surface Equivalent Radar ») moyenne d'un fouillis surfacique sur une cellule distance-vitesse est alors proportionnelle à la cellule de résolution Doppler.

La mesure de distance d'une forme d'onde Doppler est ambigüe, en fonction de la période de récurrence :

$$D_{amb} = c\ Tr\ /\ 2$$

où c est la célérité de la lumière et $Tr$ est la période de récurrence ($Tr = 1/Fr$).

En règle générale, les fréquences de répétition Fr sont choisies en fonction des gammes de vitesse à traiter par le mode de par le fait que la vitesse ambigüe est fonction de la longueur d'onde $\lambda$ et de la valeur Fr :

$$V_{amb} = \lambda\ Fr\ /\ 2.$$

Ainsi, pour la détection et le pistage de cibles à forte vitesse et capacité d'évasive (chasseurs, missiles, etc.) on préfère usuellement employer des formes d'onde à grande valeur de Fr, tandis que pour la détection et le pistage de cibles à faible ou moyenne vitesse (véhicules terrestres, hélicoptères, drones légers, etc.) on préfère usuellement employer des formes d'onde à basse valeur de *Fr.*

Plusieurs valeurs de Fr sont alors employées pour lever conjointement les ambigüités distance et vitesse des échos détectés par un détecteur en puissance ou en contraste : les pré-détections sont corrélées sur l'ensemble des Fr jouées dans la même direction de pointage afin de lever les ambigüités distance/vitesse avec un critère « K/N ».

Lorsque le nombre de pré-détections est élevé, par exemple sur conditions atmosphériques dégradées (échos d'ange), sur remontées de fausses alarmes liées à la cuvette de fouillis en aéroporté mal gérées par le détecteur, ou bien sur une forte densité de cibles mobiles élevées (passage près d'une route, etc.), le nombre d'associations à réaliser par l'extracteur explose et cela peut conduire à un nombre de fausses associations et donc de fausses alarmes importants.

La solution classique consiste alors à relever les seuils de détection, soit de manière locale, soit de manière globale, afin de réguler les pré-détections à l'entrée de l'extracteur pour éviter les faux dépliements. Une autre solution consiste à lister par ordre décroissant les pré-détections en fonction de leur Rapport Signal à Environnement (RSE) de sorte à associer entre elles les échos de forte puissance puis à descendre progressivement en RSE dans la liste des pré-détections. Ces solutions ne sont toutefois pas suffisamment efficaces.

Plus particulièrement, la première solution implique une baisse de sensibilité du radar. La seconde solution consiste à hiérarchiser les détections puis à jeter éventuellement les détections en fin de panier. Cette seconde solution peut réduire le nombre de fausses associations, en particulier les derniers éléments de la liste (les plus proches du seuil) sont rejetés. Pour cela, un critère de densité maximale de détections (ou un nombre de détections max) par direction peut être fourni. Dans les deux cas, une désensibilisation (baisse de portée, ou augmentation de la SER minimale détectable) est observée.

La présente invention a pour but de réduire efficacement le nombre de faux dépliements en sortie de l'extracteur, sans relever les seuils de détection et sans processus hiérarchique fondées sur les valeurs RSE.

À cet effet, l'invention a pour objet un procédé de fonctionnement d'un radar de détection de cibles suivant un mode Doppler, le procédé comprenant la mise en œuvre de plusieurs récurrences d'une étape d'émission/réception de signaux, chaque n-ième récurrence de ladite étape comprenant les sous-étapes suivantes :

+ génération d'au moins deux impulsions consécutives associées à des sous-modes Doppler différents définissant des bilans énergétiques différents ;
+ émission des impulsions dans des bandes fréquentielles différentes ;

+ réception dans une fenêtre temporelle commune des échos des impulsions ;

+ pour chaque sous-mode Doppler, traitement des échos reçus pour générer une liste de cibles pré-détectées suivant ce sous-mode Doppler ;

le procédé comprenant en outre les étapes suivantes :

- pour chaque sous-mode Doppler et à partir de la liste de cibles pré-détectées correspondante, mise en œuvre d'un traitement d'extraction pour générer une liste de cibles détectées par ce sous-mode Doppler ;
- fusion des listes de cibles détectées correspondant aux sous-modes Doppler différents et pistage suivant une liste fusionnée.

Suivant d'autres aspects avantageux de l'invention, le procédé comprend une ou plusieurs des caractéristiques suivantes, prises isolément ou suivant toutes les combinaisons techniquement possibles :

- le procédé comprenant une étape de masquage de pré-détections effectuées par le sous-mode Doppler ayant un bilan énergétique moins important, pour le sous-mode Doppler ayant un bilan énergétique plus important ;
- l'étape de masquage est mise en œuvre pendant la sous-étape de traitement des échos reçus suivant le mode Doppler ayant un bilan énergétique plus important ;
- avantageusement, ladite étape comprenant un masquage ou un brouillage des cases correspondant au mode Doppler ayant un bilan énergétique moins important ;
- l'étape de masquage est mise en œuvre après la sous-étape de traitement ; avantageusement, ladite étape comprenant un retrait de cibles pré-détectées par un sous-mode Doppler ayant un bilan énergétique plus important qui sont co-localisées avec celles détectées par un sous-mode Doppler ayant un bilan énergétique moins important ;
- la sous-étape de traitement des échos reçus suivant un sous-mode Doppler est mise en œuvre pour un domaine spatial défini par ce sous-mode Doppler ;
- chaque domaine spatial est défini par une distance jusqu'au radar de détection ;
- l'impulsion associée à un sous-mode Doppler ayant un bilan énergétique plus important a une largeur plus importante que l'impulsion associée à un sous-mode Doppler ayant un bilan énergétique moins important ;
- les impulsions de la ou de chaque paire d'impulsions associées aux sous-modes Doppler différents sont espacées d'un écart temporel choisi le plus petit possible ;
- les impulsions définissent une même forme d'onde ;

- les impulsions sont émises selon une même direction lors d'une même récurrence de l'étape d'émission/réception de signaux ;
- lors de la sous-étape d'émission, les impulsions correspondantes sont émises en utilisant des pentes différentes de chirps utilisés pour les émettre ;
- lors de la sous-étape de réception, des échos associés à des impulsions différentes sont distingués en déterminant les pentes des chirps correspondants
- lors de la sous-étape d'émission les impulsions correspondantes sont émises en utilisant des polarisations différentes ;
- lors de la sous-étape de réception, des échos associés à des impulsions différentes sont distingués en déterminant leurs polarisations ;
- une polarisation est émise pour chaque impulsion ou un ensemble de polarisations formant une signature est émise pour chaque impulsion.

L'invention a également pour objet un radar de détection de cibles comprenant des moyens techniques configurés pour mettre en œuvre le procédé tel que défini ci-dessus.

L'invention apparaîtra plus clairement à la lecture de la description qui va suivre, donnée uniquement à titre d'exemple non limitatif, et faite en référence aux dessins dans lesquels :

- [Fig. 1] la figure 1 est une vue schématique d'un radar de détection selon l'invention,
- [Fig. 2] la figure 2 est un organigramme d'un procédé de fonctionnement du radar de la figure 1, et
- [Fig. 3] [Fig. 4] les figures 3 à 4 sont différentes vues illustrant la mise en œuvre du procédé de la figure 2.

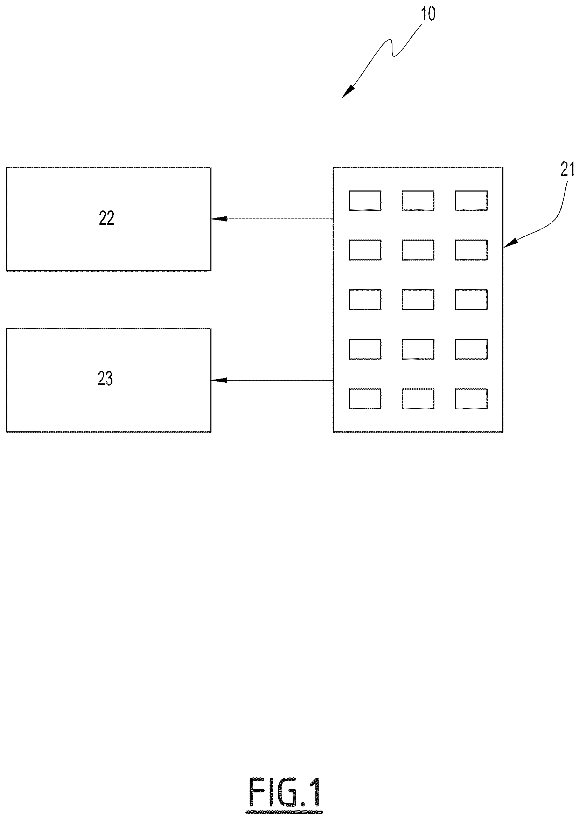

La figure 1 illustre un radar de détection 10 selon l'invention. Ce radar 10 est destiné par exemple à être embarqué sur un porteur mobile se déplaçant dans l'air et/ou sur une surface terrestre et/ou sur une surface maritime. Avantageusement, le radar 10 est destiné à être embarqué sur un porteur se déplaçant dans l'air, tel qu'un aéronef. Alternativement, le radar 10 est disposé de manière fixe.

Le radar 10 permet de détecter des cibles suivant un mode Doppler par exemple de type MMTI (de l'anglais « Maritime Moving Target Indicator » pour « indicateur d'une cible maritime mobile » en français), GMTI (de l'anglais « Ground Moving Target Indicator » pour « indicateur d'une cible terrestre mobile » en français) ou AMTI (de l'anglais « Aerial Moving Targets » pour « cibles aériennes mobiles » en français).

En référence à la figure 1, le radar 10 comprend un réseau d'antennes élémentaires 21 permettant d'émettre des signaux sous la forme d'impulsions et de recevoir des signaux correspondant à des échos de ces impulsions.

Le radar 10 comprend en outre une unité d'émission 22 permettant de générer les impulsions à émettre par le réseau d'antennes 21 et une unité de réception 23 permettant de traiter les échos reçus par le réseau d'antennes 21 afin d'en déduire la présence d'une cible et éventuellement, une vitesse et une distance jusqu'à cette cible.

Chacune des unités 22, 23 est réalisée par exemple sous la forme d'un circuit programmable de type FPGA (de l'anglais « Field Programmable Gate Array ») et/ou de type ASIC (de l'anglais « Application-Specific Integrated Circuit »). En complément ou en variante, chacune de ces unités 22, 23 est réalisée au moins partiellement sous la forme d'un logiciel exécutable par un processeur et stocké dans une mémoire.

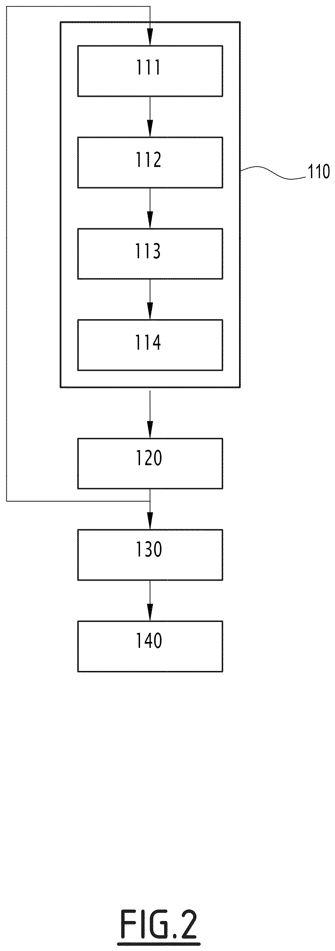

Le procédé de fonctionnement du radar 10 sera désormais expliqué en référence à la figure 2 présentant un organigramme de ses étapes.

Il est considéré que ce procédé est mis en œuvre lors d'un balayage électronique de l'espace autour du radar 10, par exemple par la mise en œuvre de formation de faisceaux conventionnelle à l'émission et en réception. En particulier, ce procédé comprend la mise en œuvre itérative au moins des étapes 110 et 120 décrites ci-dessous pour chaque position de pointage du radar 10. Chaque itération de ces étapes est appelée récurrence.

Il est considéré en outre que les positions de pointage se succèdent selon un sens de rotation prédéterminé et définissent toutes une ouverture angulaire dépendante de l'angle de dépointage connue de l'homme de l'art. L'ensemble des positions de pointage définissent un cône de visibilité disponible du radar 10. Autrement dit, par « cône de visibilité », on entend l'ensemble des positions de pointage différentes lors d'un tour de balayage effectué par le radar 10. Sans perte de généralité, la séquence de ces positions de pointage peut être également aléatoire pour réaliser un scan complet du cône de visibilité.

Chaque n-ième récurrence de l'étape 110 comprend une émission/réception de signaux dans la position de pointage correspondante.

En particulier, lors de cette étape, l'unité d'émission 22 du radar 10 émet des signaux ayant une forme d'onde particulière et l'unité de réception 23 reçoit des échos de ces signaux.

Les signaux émis/reçus lors de cette étape sont de type dit onde communalisée.

Chaque onde communalisée comprend au moins deux impulsions consécutives associées à des bilans énergétiques différents. Ainsi, chaque impulsion définit un sous-mode Doppler avec un domaine spatial qui lui est associé comme cela sera expliqué par la suite. Les sous-modes Doppler différents emploient le même jeu de formes d'onde et en particulier une même période de répétition et une même largeur de bande émise.

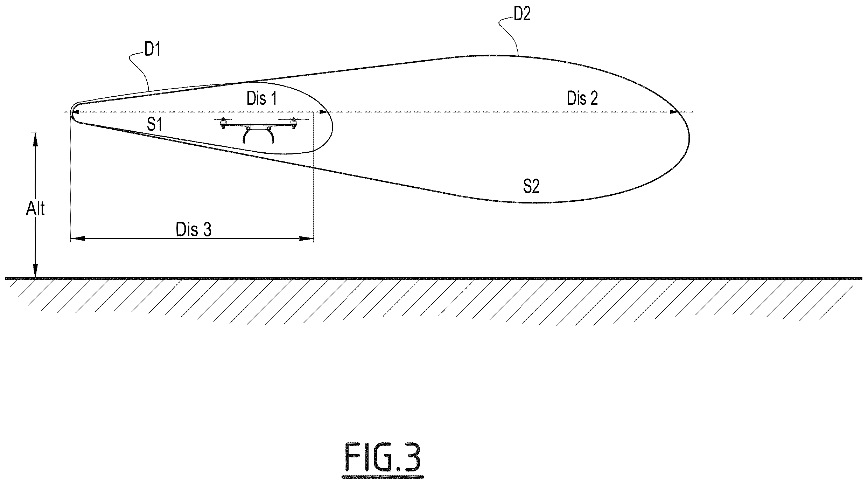

La figure 3 illustre un exemple de mode Doppler par exemple de type AIR décomposé en deux sous-modes, à savoir un sous-mode S1 définissant un domaine spatial D1 et un sous-mode S2 définissant un domaine spatial D2. Le sous-mode S2 est de plus fort bilan énergétique que le sous-mode S1. Le domaine spatial D2 est donc plus important que le domaine spatial D1 et inclut ce dernier. Le domaine spatial D1 correspond par exemple à la portée du sous-mode vis-à-vis d'une SER d'une cible donnée, ou issue d'une fonction dépendant de cette portée et cette SER de référence

De manière générale, chaque domaine spatial peut être défini par une distance jusqu'au radar 10. Dans l'exemple de la figure 3, le domaine D2 peut être défini par une distance Dis2 jusqu'au radar 10 et le domaine D1 peut être défini par une distance Dis1 jusqu'au radar 10 de sorte que Dis2>Dis1.

L'étape 110 d'émission/réception de signaux comprend plusieurs sous-étapes qui seront expliquées en détail ci-dessous.

Lors de la sous-étape 111, l'unité d'émission 22 du radar 10 génère une pluralité d'impulsions consécutives associées à des sous-modes Doppler différents, c'est-à-dire à des bilans énergétiques différents.

Par la suite, sans perte de généralité, seul le cas avec deux sous-modes Doppler et donc deux impulsions sera décrit en détail. Le cas d'un nombre de sous-modes Doppler strictement supérieur à 2 peut être déduit de manière analogue.

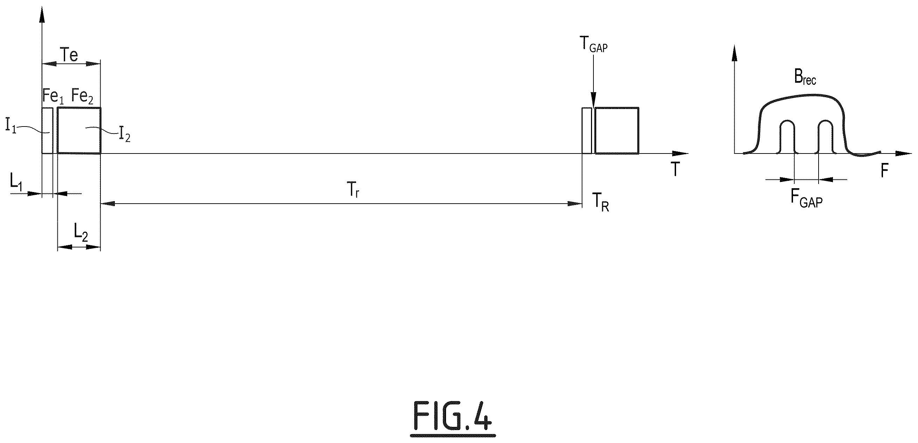

Ainsi, lors de la sous-étape 111, l'unité d'émission 22 génère une première impulsion $I_1$ lié à un premier sous-mode (par exemple, le sous-mode S1 dans l'exemple de la figure 3) et une deuxième impulsion $I_2$ lié à un deuxième sous-mode (par exemple, le sous-mode S2 dans l'exemple de la figure 3). Ces deux impulsions sont illustrées sur la figure 4.

Les impulsions $I_1$ et $I_2$ sont associées à une même fréquence de répétition et à une même direction d'émission. Par ailleurs, ces impulsions $I_1$ et $I_2$ sont associées à des fréquences d'émission différentes. La direction d'émission peut être définie par exemple par un couple de valeurs angulaires. Ces valeurs angulaires correspondent par exemple à l'élévation (ou site) et à l'azimut d'émission, dénotées respectivement par El et Az.

Les impulsions $I_1$ et $I_2$ sont générées dans une fenêtre d'émission Te dans laquelle chaque impulsion a une largeur Li et espacée de l'autre impulsion et de l'une des frontières de la fenêtre d'émission Te par un écart temporel $T_{GAP}$. Cet écart temporel $T_{GAP}$ est choisi le plus petit possible en fonction des capacités de l'émetteur. Dans tout ce qui suit, l'indice i=1 désigne toute valeur relative à la première impulsion et i=2 désigne toute valeur relative à la deuxième impulsion.

Le bilan énergétique de chaque impulsion est défini par sa largeur Li. Ainsi, pour avoir des bilans énergétiques différents, la largeur Li de l'une des impulsions est strictement supérieure à la largeur Li de l'autre. Dans un mode particulier, la largeur Li de l'une des impulsions est au moins deux fois plus grande que celle de l'autre. Ainsi, selon un exemple, 5% de la fenêtre d'émission Te peut être allouée à l'un des sous-modes et 95% de la fenêtre d'émission Te peut être allouée à l'autre sous-mode. Cela représente une différence de bilan énergétique d'environ 13dB. Par exemple, dans le cas d'un rapport 1%/99%, la différence de bilan énergétique est de 20dB.

Dans l'exemple de la figure 4, la largeur $L_2$ de l'impulsion associée au deuxième sous-mode (c'est-à-dire impulsion $I_2$) est strictement supérieure à la largeur $L_1$ de l'impulsion associée au premier sous-mode (c'est-à-dire impulsion $I_1$). Ainsi, dans cet exemple, le deuxième sous-mode présente un bilan énergétique plus important que le premier sous-mode. Inversement, la première impulsion $I_1$ peut avoir une largeur plus grande que la deuxième impulsion $I_2$.

Dans le domaine fréquentiel, les impulsions partagent un même support fréquentiel $B_{rec}$, avec un écart fréquentiel $F_{GAP}$ entre les porteuses Fi correspondantes supérieur aux bandes fréquentielles Bi de ces impulsions. L'écart fréquentiel $F_{GAP}$ est choisi suffisant pour distinguer les échos de ces impulsions à la réception. Dans tout ce qui suit, une bande fréquentielle est définie par une fréquence centrale et une largeur de bande. Avantageusement, dans la suite, toutes les bandes fréquentielles présentent une même largeur. En outre, l'écart fréquentiel $F_{GAP}$ est mesuré entre un couple de fréquences centrales correspondantes et est supérieur à la largeur de chaque bande fréquentielle.

Les bandes fréquentielles $B_1$ et $B_2$ respectivement de la première impulsion $I_1$ et de la deuxième impulsion $I_2$ sont avantageusement choisies les mêmes pour chaque récurrence de l'étape 110. Ainsi, la même fréquence centrale $Fe_1$ et la même fréquence centrale $Fe_2$ sont choisies respectivement pour la première impulsion et pour la deuxième impulsion dans chaque récurrence de l'étape 110, en assurant une cohérence de phases entre les récurrences afin de pouvoir procéder à un traitement Doppler. En outre, avantageusement et de manière alternative, l'impulsion la plus courte peut être réalisée sans modulation linéaire de fréquence (LFM en anglais pour « Linear Frequency Modulation ») de sorte que sa largeur temporelle soit compatible de la résolution distance souhaitée, sans compression d'impulsion (car pas LFM), i.e. $L_1 = 1/B_2$.

Lors de la sous-étape 112, l'unité d'émission 22 émet les impulsions générées lors de la sous-étape précédente dans les bandes fréquentielles correspondantes.

Lors de la sous-étape 113, l'unité de réception 23 reçoit des échos correspondant aux impulsions émises dans une fenêtre temporelle commune de réception. La durée Tr de cette fenêtre commune de réception est égale à la durée totale de la récurrence $T_R$ (c'est-à-dire le temps d'observation du pointage correspondant pour une récurrence, tel que défini précédemment) moins la durée de la fenêtre d'émission Te. Lors de la réception, les échos correspondant aux impulsions différentes sont distingués par les bandes fréquentielles différentes, en utilisant par exemple des filtres passe-bande autour des fréquences centrales.

Lors de la sous-étape 114, l'unité de réception 23 effectue un prétraitement des échos reçus de manière séparée pour chaque sous-mode Doppler.

De manière connue en soi, ce prétraitement comprend pour chaque sous-mode Doppler la mise en œuvre d'au moins certaines techniques choisies parmi une technique de compression d'impulsion, une technique de réjection de fouillis, une technique de traitement Doppler, une technique de mesure de bruit ambiant, une technique de détection par exemple de type TFAC (« taux de fausse alarme constant »).

La technique de détection permet notamment de pré-détecter des cibles qui doivent être confirmées lors d'un traitement d'extraction qui sera expliqué en détail par la suite. Ainsi, cette technique permet de générer une liste de pré-détections, c'est-à-dire une liste de cibles pré-détectées, en analysant des signaux issus de chaque case du domaine spatial correspondant.

Lors d'une étape 120, l'unité de réception 23 effectue un masquage de pré-détections effectuées par le sous-mode Doppler ayant un bilan énergétique moins important pour l'autre sous-mode Doppler.

Selon différents modes de réalisation, cette étape 120 peut être effectuée pendant la mise en œuvre de la sous-étape 114 de prétraitement ou alors après la mise en œuvre de celle-ci (exemple de la figure 2).

Dans le premier cas, c'est-à-dire lorsque l'étape 120 est effectuée pendant la mise en œuvre de la sous-étape 114, le masquage de pré-détections peut être effectué avant la mise en œuvre des techniques de mesure de bruit ambiant et de détection, en utilisant par exemple l'une des techniques suivantes :

- en appliquant un masque sur les cases pré-détectées par le sous-mode Doppler ayant un bilan énergétique moins important. Autrement dit, par cette technique, on interdit l'emploi de ces cases par le sous-mode ayant un bilan énergétique plus important.
- en appliquant un brouillage, i.e. en remplaçant la puissance brute des cases pré-détectées du sous-mode Doppler ayant un bilan énergétique moins important par leur estimation de bruit ambiant dans la carte du sous-mode Doppler ayant un bilan énergétique plus important. Ainsi, le traitement effectué par ce dernier sous-mode Doppler s'applique partout mais ne devrait pas lever de détections dans les zones pré-détectées par l'autre sous-mode.

Dans le deuxième cas, c'est-à-dire lorsque l'étape 120 est effectuée après la mise en œuvre de la sous-étape 114, le masquage peut comprendre un retrait de pré-détections réalisées par le sous-mode Doppler ayant un bilan énergétique plus important qui sont co-localisées avec celles détectées par l'autre sous-mode Doppler.

Dans certains modes de réalisation, le masquage en relation avec le sous-mode Doppler ayant un bilan énergétique plus important s'effectue après un traitement d'extraction réalisé en relation avec le sous-mode Doppler ayant un bilan énergétique moins important. Un tel traitement d'extraction est décrit dans l'étape 130 ci-dessous.

En particulier, dans un tel cas, le traitement d'extraction des pré-détections du sous-mode Doppler ayant un bilan énergétique moins important permet de créer une liste de détections confirmées. Les pré-détections associées à ces détections confirmées sont ensuite transmises à l'étape 120 mise en œuvre en relation avec le sous-mode Doppler ayant un bilan énergétique plus important et sont exclues de tout traitement par ce sous-mode Doppler. Dans ce cas, le masquage s'effectue donc après la mise en œuvre d'un traitement d'extraction réalisé par le sous-mode Doppler ayant un bilan énergétique moins important.

Lors d'une étape 130 suivante, l'unité de réception 23 effectue un traitement d'extraction pour chaque sous-mode Doppler à partir de la liste de pré-détections correspondant à ce sous-mode Doppler.

En particulier, et ce de manière connue en soi, un tel traitement d'extraction met à profit les informations glanées par l'emploi de plusieurs périodes de répétition (ou fréquence de répétition Fr) jouées au sein d'un même pointage afin de lever les ambiguïtés distance, vitesse, en corrélant les différentes pré-détections obtenues sur chaque Fr. Tout autre traitement permettant d'identifier des cibles dans un mode de veille peut être employé, par exemple et sans limitation un traitement d'extraction complémentaire, de type « tour à tour », pour renforcer la maitrise du taux de fausse alarme en amont de l'algorithme de pistage.

Une cible est considérée comme détectée lorsqu'à l'issue de ce traitement d'extraction (aussi appelé lever d'ambiguïté), l'unité de réception 23 conclut qu'une telle cible est présente dans la zone considérée.

Une cible est considérée comme définitivement détectée lorsqu'après plusieurs mises en œuvre des étapes **110** et 130, au moins K détections sont présentes et corrèlent dans une même zone sur un horizon de N mises en œuvre de ces étapes. Dans cette notation, le nombre K signifie le nombre d'étapes 130 lors desquelles la cible était considérée comme détectée. Le coefficient K/N peut être alors comparé avec un seuil qui est appelé seuil d'extraction des cibles.

À l'issue de cette étape 130, l'unité de réception 23 génère une liste de détections, c'est-à-dire une liste de cibles détectées, pour chaque sous-mode Doppler.

Lors d'une étape 140 suivante, l'unité de réception 23 fusionne les listes de détections correspondant aux différents sous-modes Doppler.

Ainsi, le pistage peut être effectué ensuite en utilisant les listes fusionnées de détections.

On conçoit alors que le procédé selon l'invention présente un certain nombre d'avantages.

En particulier, la décomposition du mode de détection en au moins deux sous-modes permet de séparer les pré-détections produites à ingérer par le traitement d'extraction. Ainsi, la probabilité de fausses associations et le nombre de faux dépliements sont considérablement réduits lors des traitements d'extraction.

À ce titre, les domaines recherche des deux extracteurs peuvent être réduits sur l'axe de distance. Dans l'exemple de la figure 3, l'extracteur du sous-mode S1 peut ainsi traiter uniquement les dépliements jusqu'à une distance Dis1 (néanmoins supérieure à sa portée typique pour la gamme de SER la plus forte à détecter) et l'extracteur du sous-mode S2 peut traiter les dépliements distance à partir d'une distance Dis3 qui est légèrement inférieure à la distance Dis1 pour avoir un recouvrement suffisant.

Dans certains modes de réalisation, le procédé de fonctionnement tel qu'expliqué précédemment comprend en outre la mise en œuvre d'au moins une technique permettant de séparer, lors de l'émission/réception des ondes communalisées, les échos des impulsions correspondant à des sous-modes différents pour reconstituer une image complète de l'environnement.

Selon une première technique, lors de la mise en œuvre de la n-ième récurrence de l'étape 110 et notamment lors de la sous-étape de l'émission 112, l'unité d'émission 22 choisit l'une des impulsions, par exemple la première impulsion et ajoute une phase aléatoire $\phi_{in}$ à cette impulsion. Avantageusement, l'unité d'émission 22 ajoute une phase aléatoire différente $\phi_{in}$ à chacune des impulsions. La ou chaque impulsion ayant une phase aléatoire $\phi_{in}$ ajoutée est dite par la suite impulsion déphasée.

Il est à noter que le choix de l'impulsion à déphaser peut rester le même pour chaque récurrence de cette sous-étape 112. Autrement dit, lorsqu'une seule impulsion est déphasée lors de cette sous-étape, la même impulsion est déphasée dans chaque récurrence de cette étape. Lorsque les deux impulsions sont déphasées lors de cette sous-étape, ces impulsions sont également déphasées dans chaque récurrence de cette sous-étape.

Puis, lors de la sous-étape de réception 113, l'unité de réception 23 compense le déphasage des échos reçus dans la bande fréquentielle de la ou de chaque impulsion déphasée, par la phase aléatoire correspondante. Autrement dit, le déphasage s'effectue en faisant une soustraction de la valeur $\phi_{in}$ dans la bande correspondant à l'indice i.

Ainsi, lors du traitement qui suit, seulement les échos correspondant au sous-mode correspondant peuvent être traités de manière cohérente. Le déphasage des autres échos ne peut pas se faire correctement de sorte qu'ils sont considérés comme des bruits blancs. Cette technique requiert par ailleurs de traiter en parallèle les rangs d'ambiguïté distance et d'avoir un nombre de récurrences suffisant pour assurer l'isolation nécessaire.

D'autres techniques pour obtenir une meilleure isolation des échos correspondant à des différents sous-modes lors de leur réception sont également possibles. Les techniques expliquées ci-dessous permet notamment d'effectuer un seul traitement Doppler contrairement à la technique précédemment citée de phase aléatoire.

Ainsi, selon une deuxième technique, lors de la mise en œuvre de la n-ième récurrence de l'étape 110 et notamment lors de la sous-étape de l'émission 112, l'unité d'émission 22 met en œuvre des pentes différentes des chirps utilisés pour émettre les impulsions associées aux sous-modes différents. Autrement dit, lors de cette sous-étape 112, l'unité d'émission 22 émet les impulsions en utilisant soit une pente ascendante soit une pente descendante en fonction du sous-mode associé à chaque impulsion. La même pente est alors utilisée pour toutes les impulsions de ce type dans toutes les récurrences de l'étape 110.

Par exemple, pour toutes les récurrences, une pente ascendante est choisie pour les impulsions associées à un sous-mode particulier et une pente descendante est choisie pour les impulsions associées à un autre sous-mode particulier.

Puis, lors de la sous-étape de réception 113, l'unité de réception 23 reçoit des échos ayant des pentes fréquentielles différentes. Cette unité de réception 23 détermine donc les pentes reçues (en utilisant notamment des filtres adaptés) afin d'isoler les échos correspondant aux sous-modes différents.

Selon une troisième technique permettant d'obtenir également une meilleure isolation des échos correspondant aux sous-modes différents lors de leur réception, lors de la mise en œuvre de la n-ième récurrence de l'étape 110 et notamment lors de la sous-étape de l'émission 112, l'unité d'émission 22 met en œuvre des polarisations différentes des ondes utilisées pour émettre les impulsions associées aux sous-modes différents. Autrement dit, lors de cette sous-étape 112, l'unité d'émission 22 émet l'onde portant chaque impulsion avec une polarisation choisie en fonction du sous-mode associé à cette impulsion. Cette même polarisation est choisie pour ce type d'impulsion pour toutes les récurrences de l'étape 110.

Par exemple, deux polarisations, à savoir une polarisation verticale et une polarisation horizontale peuvent être choisies pour les impulsions émises lors de la sous-étape 112. Selon d'autres exemples, une polarisation à 45° ou en circulaire peut être utilisée.

Puis, lors de la sous-étape de réception 113, l'unité de réception 23 reçoit des échos ayant des polarisations différentes. Cette unité de réception 23 détermine donc les polarisations des échos reçus (en utilisant notamment des filtres adaptés) afin d'isoler les échos correspondant aux sous-modes différents.

Le principe qui vient d'être décrit peut être raffiné en utilisant plusieurs polarisations dans la même impulsion.

Dans un tel cas, chaque impulsion comporte une signature de polarisation spécifique. Une telle signature correspond à un code de polarisation.

Cette technique permet ainsi de colorer les différentes impulsions dans l'espace et d'obtenir une réjection supplémentaire de 20 à 30 dB.

Dans certains modes de réalisation, les techniques précitées sont combinées entre elles pour être mises en œuvre simultanément. En outre, le traitement d'extraction tel qu'expliqué précédemment pour lever les ambiguïtés en distance et vitesse et/ou selon au moins une direction de pointage, peut être également utilisé en combinaison avec la deuxième technique ou la troisième technique, telle que décrite ci-dessus.

**Revendications**

1. Procédé de fonctionnement d'un radar (10) de détection de cibles suivant un mode Doppler, le procédé comprenant la mise en œuvre de plusieurs récurrences d'une étape (110) d'émission/réception de signaux, chaque n-ième récurrence de ladite étape (110) comprenant les sous-étapes suivantes :

   + génération (111) d'au moins deux impulsions consécutives associées à des sous-modes Doppler différents définissant des bilans énergétiques différents, le bilan énergétique de chaque impulsion étant défini par sa largeur ;
   + émission (112) des impulsions dans des bandes fréquentielles différentes ;
   + réception (113) dans une fenêtre temporelle commune des échos des impulsions ;
   + pour chaque sous-mode Doppler, traitement (114) des échos reçus pour générer une liste de cibles pré-détectées suivant ce sous-mode Doppler ;

   le procédé comprenant en outre les étapes suivantes :

   - pour chaque sous-mode Doppler et à partir de la liste de cibles pré-détectées correspondante, mise en œuvre (130) d'un traitement d'extraction pour générer une liste de cibles détectées par ce sous-mode Doppler ;
   - fusion (140) des listes de cibles détectées correspondant aux sous-modes Doppler différents et pistage suivant une liste fusionnée.

2. Procédé selon la revendication 1, comprend en outre une étape (120) de masquage de pré-détections effectuées par le sous-mode Doppler ayant un bilan énergétique moins important, pour le sous-mode Doppler ayant un bilan énergétique plus important.

3. Procédé selon la revendication 2, dans lequel l'étape de masquage (120) est mise en œuvre pendant la sous-étape de traitement (114) des échos reçus suivant le mode Doppler ayant un bilan énergétique plus important ;

avantageusement, ladite étape (120) comprenant un masquage ou un brouillage de cases correspondant au mode Doppler ayant un bilan énergétique moins important.

4. Procédé selon la revendication 2, dans lequel l'étape de masquage (120) est mise en œuvre après la sous-étape de traitement (114) ;

avantageusement, ladite étape (120) comprenant un retrait de cibles pré-détectées par un sous-mode Doppler ayant un bilan énergétique plus important qui sont co-localisées avec celles détectées par un sous-mode Doppler ayant un bilan énergétique moins important.

5. Procédé selon l'une quelconque des revendications précédentes, dans lequel la sous-étape de traitement (114) des échos reçus suivant un sous-mode Doppler est mise en œuvre pour un domaine spatial défini par ce sous-mode Doppler.

6. Procédé selon la revendication 5, dans lequel chaque domaine spatial est défini par une distance jusqu'au radar de détection (10).

7. Procédé selon l'une quelconque des revendications précédentes, dans lequel l'impulsion associée à un sous-mode Doppler ayant un bilan énergétique plus important a une largeur plus importante que l'impulsion associée à un sous-mode Doppler ayant un bilan énergétique moins important.

8. Procédé selon l'une quelconque des revendications précédentes, dans lequel les impulsions de la ou de chaque paire d'impulsions associées aux sous-modes Doppler différents sont espacées d'un écart temporel choisi le plus petit possible.

9. Procédé selon l'une quelconque des revendications précédentes, dans lequel les impulsions définissent une même forme d'onde.

10. Procédé selon l'une quelconque des revendications précédentes, dans lequel les impulsions sont émises selon une même direction lors d'une même récurrence de l'étape d'émission/réception de signaux (110).

11. Procédé selon l'une quelconque des revendications précédentes, dans lequel :

- lors de la sous-étape d'émission (112), les impulsions correspondantes sont émises en utilisant des pentes différentes de chirps utilisés pour les émettre ;
- lors de la sous-étape de réception (113), des échos associés à des impulsions différentes sont distingués en déterminant les pentes des chirps correspondants.

12. Procédé selon l'une quelconque des revendications précédentes, dans lequel :

- lors de la sous-étape d'émission (112), les impulsions correspondantes sont émises en utilisant des polarisations différentes ;
- lors de la sous-étape de réception (113), des échos associés à des impulsions différentes sont distingués en déterminant leurs polarisations.

13. Procédé selon la revendication 12, dans lequel une polarisation est émise pour chaque impulsion ou un ensemble de polarisations formant une signature est émise pour chaque impulsion.

14. Radar (10) de détection de cibles comprenant des moyens techniques (21, 22, 23) configurés pour mettre en œuvre le procédé selon l'une quelconque des revendications précédentes.

## FIG.1

FIG.3

FIG.4

| | Europäisches Patentamt European Patent Office Office européen des brevets | **RAPPORT DE RECHERCHE EUROPEENNE** | **Numéro de la demande** EP 25 21 9154 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2018/156908 A1 (SILANDER ANDERS [SE]) 7 juin 2018 (2018-06-07) * figures 2b, 3a * * alinéas [0007], [0012], [0077] - [0081], [0086], [0088] * ----- | 1-14 | INV. G01S13/30 G01S7/282 G01S7/292 G01S13/26 G01S13/58 |
| X | US 5 138 323 A (TAYLOR JR JOHN W [US]) 11 août 1992 (1992-08-11) * figures 2, 3b, 5, 6 * * colonne 1, lignes 12-22, 54-55 * * colonne 4, lignes 27-30 * * colonne 5, lignes 3-14 * * colonne 7, lignes 11-28 * ----- | 1-14 | G01S13/72 G01S7/02 G01S13/24 ADD. G01S7/41 G01S13/42 |
| A | US 2008/018526 A1 (WADE BARRY [GB]) 24 janvier 2008 (2008-01-24) * figures 2, 3 * * alinéas [0008], [0013], [0017] * ----- | 1-14 | |
| A | US 2020/319292 A1 (POREZ NICOLAS [FR] ET AL) 8 octobre 2020 (2020-10-08) * figures 3, 4, 8 * * alinéas [0052], [0053], [0093], [0094] * ----- | 1-14 | **DOMAINES TECHNIQUES RECHERCHES (IPC)** G01S |

Le présent rapport a été établi pour toutes les revendications

| Lieu de la recherche | Date d'achèvement de la recherche | Examinateur |
|---|---|---|
| Munich | 12 février 2026 | Rodríguez González |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.............................................................................................
& : membre de la même famille, document correspondant

EPO FORM 1503 03.82 (P04C02)

## EP 4 752 598 A1

**ANNEXE AU RAPPORT DE RECHERCHE EUROPEENNE
RELATIF A LA DEMANDE DE BREVET EUROPEEN NO.**

EP 25 21 9154

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-02-2026

| Document brevet cité au rapport de recherche | Date de publication | Membre(s) de la famille de brevet(s) | Date de publication |
|---|---|---|---|
| US 2018156908 A1 | 07-06-2018 | EP 3311188 A1 | 25-04-2018 |
| | | ES 2995735 T3 | 11-02-2025 |
| | | KR 20180019690 A | 26-02-2018 |
| | | US 2018156908 A1 | 07-06-2018 |
| | | WO 2016204665 A1 | 22-12-2016 |
| US 5138323 A | 11-08-1992 | AUCUN | |
| US 2008018526 A1 | 24-01-2008 | AU 2006248845 A1 | 23-11-2006 |
| | | CA 2587622 A1 | 23-11-2006 |
| | | CN 101107539 A | 16-01-2008 |
| | | DK 1839071 T3 | 11-08-2014 |
| | | EP 1839071 A1 | 03-10-2007 |
| | | ES 2487490 T3 | 21-08-2014 |
| | | JP 2008527391 A | 24-07-2008 |
| | | KR 20070089789 A | 03-09-2007 |
| | | NO 342921 B1 | 03-09-2018 |
| | | PL 1839071 T3 | 31-10-2014 |
| | | SG 161298 A1 | 27-05-2010 |
| | | US 2008018526 A1 | 24-01-2008 |
| | | WO 2006123084 A1 | 23-11-2006 |
| US 2020319292 A1 | 08-10-2020 | EP 3948338 A1 | 09-02-2022 |
| | | FR 3094797 A1 | 09-10-2020 |
| | | JP 7565942 B2 | 11-10-2024 |
| | | JP 2022527817 A | 06-06-2022 |
| | | US 2020319292 A1 | 08-10-2020 |
| | | WO 2020201579 A1 | 08-10-2020 |

Pour tout renseignement concernant cette annexe : voir Journal Officiel de l'Office européen des brevets, No.12/82